(19)

Europäisches
Patentamt
European
Patent Office
Office européen
des brevets

(11) **EP 4 027 273 A1**

(12) **EUROPEAN PATENT APPLICATION**

(43) Date of publication:
**13.07.2022   Bulletin 2022/28**

(21) Application number: **21150717.3**

(22) Date of filing: **08.01.2021**

(51) International Patent Classification (IPC):
**G06N 7/00** (2006.01)    **G06N 3/08** (2006.01)
**G06N 3/00** (2006.01)    **G06N 5/00** (2006.01)
**G06N 3/04** (2006.01)

(52) Cooperative Patent Classification (CPC):
**G06N 7/005; G06N 3/006; G06N 3/0472;**
**G06N 3/088; G06N 5/003**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventors:
• **Ferreira, Fabio**
  **76133 Karlsruhe (DE)**
• **Hutter, Frank**
  **79110 Freiburg (DE)**
• **Nierhoff, Thomas**
  **86157 Augsburg (DE)**

Remarks:
Amended claims in accordance with Rule 137(2)
EPC.

(54) **DEVICE AND METHOD TO IMPROVE REINFORCEMENT LEARNING WITH SYNTHETIC ENVIRONMENT**

(57)   A computer-implemented method for learning a strategy ($\pi$) and/or method for learning a synthetic environment, wherein the strategy is configured to control an agent, comprising the steps of: Providing synthetic environment parameters ($\psi$) and a real environment ($\mathcal{E}_{real}$) and a population of strategies. Subsequently, repeating the following steps for a predetermined number of repetitions as a first loop:
Carrying out for each strategy of the population of strategies subsequent steps as a second loop:
disturb the synthetic environment parameters ($\psi$) with random noise;
train for a first given number of step the strategy on the disturbed synthetic environment;
evaluate the trained strategy on the real environment by determining rewards of the trained strategies;
  Updating the synthetic environment parameters depending on the noise and the rewards. Finally, outputting the evaluated strategy ($\pi$) with the highest reward on the real environment or with the best trained strategy on the disturbed synthetic environment.

---

**Algorithm 1:** NES for Learning SEs

Input: initial synthetic environment parameters $\psi$,
  real environment $\mathcal{E}_{real}$, $\epsilon_i \sim \mathcal{N}(0, \sigma^2 I)$, number of
  episodes $n_e$, population size $n_p$ ;
**repeat**
  **for** *each member of the pop.* $i = 1, 2, \ldots, n_p$ **do**
    $\psi_i = \psi + \epsilon_i$ ;
    **for** $n = 1, 2, \ldots, n_e$ **do**
      $\theta_{i,n} = \text{TrainAgent}(\theta_{i,n-1}, \mathcal{E}_{syn,\psi_i})$ ;
    **end**
    $F_{\psi,i} = \text{EvaluateAgent}(\theta_{i,n_e}, \mathcal{E}_{real})$ ;
  **end**
  $\psi \leftarrow \text{UpdateSE}(\psi, \{\epsilon_i\}_i, \{F_{\psi,i}\}_i)$ ;
**until** $n_o$ *steps*;

**Fig. 1**

Processed by Luminess, 75001 PARIS (FR)

**Description**

The invention concerns a method for improved learning of a strategy for agents by learning a synthetic environment, and a method for operating an actuator by the strategy, a computer program and a machine-readable storage medium, a classifier, a control system, and a training system.

Prior art

The publication of the authors Such, Felipe Petroski, et al. "Generative teaching networks: Accelerating neural architecture search by learning to generate synthetic training data." International Conference on Machine Learning. PMLR, 2020 (online available: https://arxiv.org/abs/1912.07768), discloses a general learning framework called the "Generative Teaching Networks" (GTNs) which consist of two neural networks, which act together in a bi-level optimization to produce a small, synthetic dataset.

Advantages of the invention

In contrast to the above mentioned publication of the authors Such et al, the present invention is different in central aspects. Particularly, the invention does not use noise vectors as input for generating synthetic datasets. Furthermore, the GTN setting is applied to reinforcement learning (RL) instead of supervised learning. Also, the invention uses Evolutionary Search (ES) to avoid the need for explicitly computing second-order meta-gradients. ES is beneficial since explicitly computing second-order meta-gradients are not required, which can be expensive and unstable, particularly in the RL setting where the length of the inner loop can be variant and high. ES can further easily be parallelized and enables our method to be agent-agnostic.

This invention enables to learn agent-agnostic synthetic environments (SEs) for Reinforcement Learning. SEs act as a proxy for target environments and allow agents to be trained more efficiently than when directly trained on the target environment. By using Natural Evolution Strategies and a population of SE parameter vectors, the present invention is capable of learning SEs that allow to train agents more robustly and with up to 50-75% fewer steps on the real environment.

Hence, the present invention improves RL by learning a proxy data generating process that allows one to train learners more effectively and efficiently on a task, that is, to achieve similar or higher performance more quickly compared to when trained directly on the original data generating process.

Another advantage is that due to the separated optimization of the strategy of an agent and the synthetic environment, the invention is compatible with all different approaches for training reinforcement learning agents, e.g. policy gradient or Deep Q-Learning.

Disclosure of the invention

In a first aspect, the present invention relates to a computer-implemented method for learning a strategy which is configured to control an agent. This means that the strategy determines an action for the agent depending on at least a provided state of the environment of the agent.

The method comprises the following steps: Initially providing synthetic environment parameters and a real environment and a population of initialized strategies. The synthetic environment is characterized by the fact that it will be constructed as well as learned while learning the strategy and it is indirectly learned depending on the real environment. This implies that the synthetic environment is a virtual reproduction of the real environment.

The agent can directly interact with the real and synthetic environment, for instance by carrying out an action and immediately receiving the state of the environment after said action. The difference is that the received state by the synthetic environment is determined depending on the synthetic environment parameters, wherein the received state by the real environment is either sensed by a sensor or determined by exhaustive simulations of the real environment.

Thereupon follows a repeating of subsequent steps for a predetermined number of repetitions as a first loop. The first loop comprises at least the steps of carrying out a second loop over all strategies of the population and afterwards updating the parameters of the synthetic environment to better align it to the real environment, more precisely to provide a better proxy environment to allow agents learned on the proxy to find a more powerful strategy for the real environment.

In the first step of the first loop, the second loop is carried out over each strategy of the population of strategies. The second loop comprises the following steps for each selected strategy of the population of strategies: At first, the parameters of the synthetic environment is disturbed with random noise. More precisely, noise is randomly drawn from a isotropic multivariate Gaussian with mean equal to zero and covariance equal to a given variance.

Thereupon, for a given number of steps/episodes, the selected strategy of the population of strategies is trained on the disturbed synthetic environment. The training is carried out as reinforcement learning, e.g. optimize the agent to optimize (e.g. maximize or minimize) a reward or regret by carrying out actions to reach a goal or goal state within an environment.

Thereupon, the trained strategies are evaluated on the real environment by determining rewards of the trained strategies.

If the second loop has been carried out for each strategy of the population, then the further step within the first loop is carried out. This step comprises updating the synthetic environment parameters depending on the rewards determined in the just fineshed second loop. Preferably, said parameters are also updated depending on the noise utilized in the second loop.

If the first loop has been terminated, the evaluated strategy with the highest reward on the real environment or with the best trained strategy on the disturbed synthetic environment is outputted.

Due to the evolutionary strategy and to train alternately both the synthetic environment as well as the strategies, a more robust and efficient training is obtained.

It is proposed that for the training in the second loop, each strategy is randomly initialized before it is trained on the disturbed synthetic environment. This has the advantage that learned synthetic environments do not overfit (i.e. do not memorize and exploit specific agent behaviors) to the agents and allow for generalization across different types of agents/strategies. Moreover, this allows designers/users to exchange agents and their initializations and do not limit users to specific settings of the agents.

It is further proposed that training of the strategies are terminated if a change of a moving average of the cumulative rewards over the last several previous episodes are smaller than a given threshold. This has the advantage that a reliable heuristic is provided as an early-stop criterion to further improve the efficiency of the method of the first aspect.

It is further proposed that the synthetic environment is represented by a neural network, wherein the synthetic environment parameters comprises weights of said neural network.

In a second aspect of the invention, a computer program and an apparatus configured to carry out the method of the first aspect are proposed.

Embodiments of the invention will be discussed with reference to the following figures in more detail. The figures show:

Figure 1    Natural Evolution Strategies for learning synthetic environments;

Figure 2    a control system having a classifier controlling an actuator in its environment;

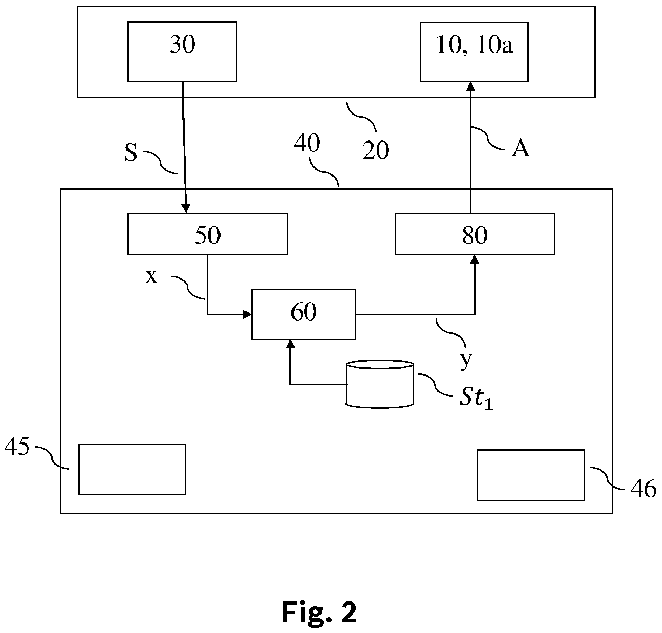

Figure 2    the control system controlling an at least partially autonomous robot;

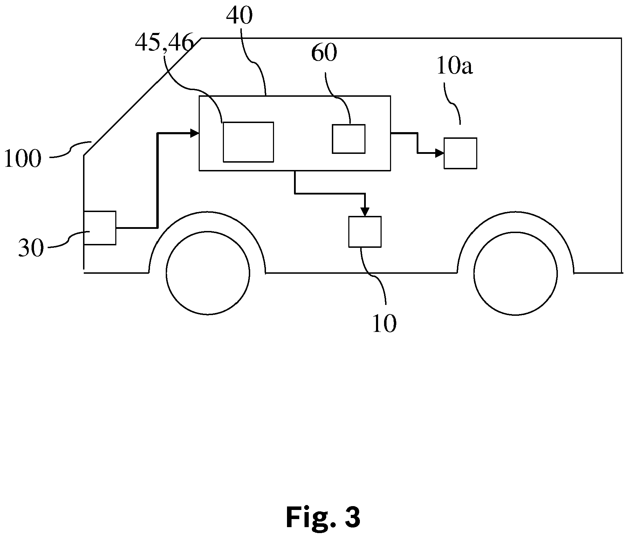

Figure 3    the control system controlling an access control system;

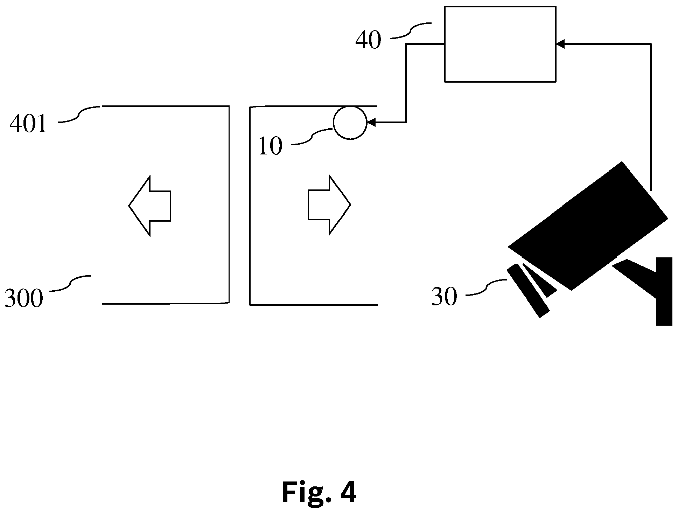

Figure 4    the control system controlling a surveillance system;

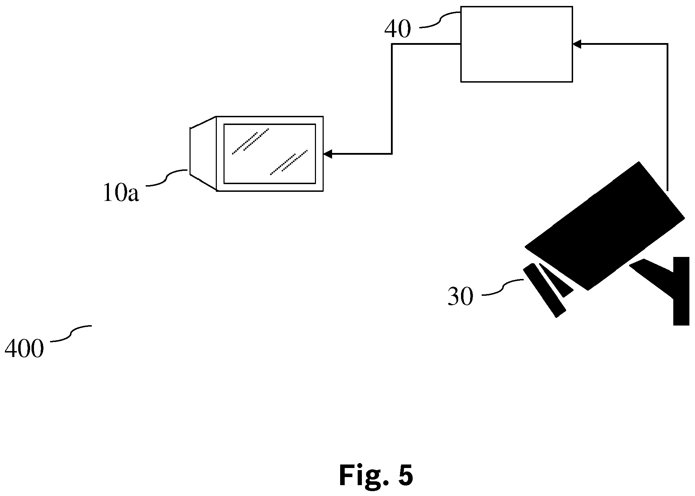

Figure 5    the control system controlling an imaging system;

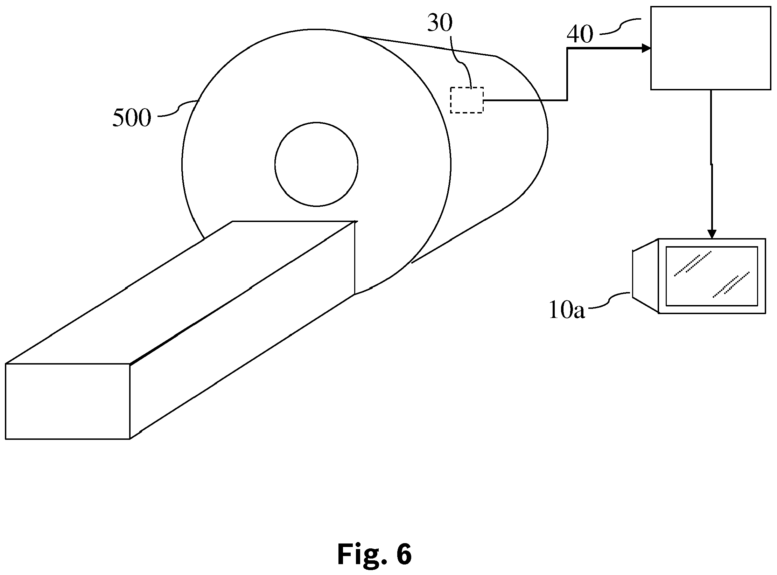

Figure 6    the control system controlling a manufacturing machine.

Detailed description

We consider a Markov Decision Process represented by a 4-tuple (*S, A , P , R*) with S as the set of states, A as the set of actions, P as the transition probabilities between states if a specific action is executed in that state and R as the immediate rewards. The MDPs we will consider are either human-designed environments $\varepsilon_{real}$ or learned synthetic environments $\varepsilon_{syn}$ referred to as SE, which is preferably represented by a neural network with the parameters $\psi$. Interfacing with the environments is in both cases almost identical: given an input $a \in A$, the environment outputs a next state s' $\in$ S and a reward. Preferably in the case of $\varepsilon_{syn}$, we additionally input the current state $s \in S$ because then it can be modeled to be stateless.

The central objective of an RL agent when interacting on an MDP $\varepsilon_{real}$ is to find an optimal policy $\pi_\theta$ parameterized by $\theta$ that maximizes the expected reward $F(\theta, \varepsilon_{syn})$. In RL, there exist many different methods to optimize this objective, for example policy gradient (Sutton, R. S.; McAllester, D.; Singh, S.; and Mansour, Y. 2000: Policy Gradient Methods for Reinforcement Learning with Function Approximation. In NeurIPS 2000.) or Deep Q-Learning (Hosu, I.; and Rebedea, T. 2016. Playing Atari Games with Deep Reinforcement Learning and Human Checkpoint Replay. CoRR abs/1607.05077.). We now consider the following bi-level optimization problem: find the parameters $\psi*$, such that the policy $\pi_\theta$ found by an agent parameterized by $\theta$ that trains on $\varepsilon_{syn}$ will achieve the highest reward on a target environment $\varepsilon_{real}$. Formally that is:

$$\psi* = \arg\max_\psi F(\theta^*(\psi); \epsilon_{real})$$

$$s.t. \ \ \theta^*(\psi) = \arg\max_\theta F(\theta; \epsilon_{syn})$$

We can use standard RL algorithms (e.g. policy gradient or Q-learning) for optimizing the strategies of the agents on the SE in the inner loop. Although gradient-based optimization methods can be applied in the outer loop, we chose Natural Evolution Strategies (NES) over such methods to allow the optimization to be independent of the choice of the agent in the inner loop and to avoid computing potentially expensive and unstable meta-gradients. Additional advantages of ES are that it is better suited for long episodes (which often occur in RL), sparse or delayed rewards, and parallelization.

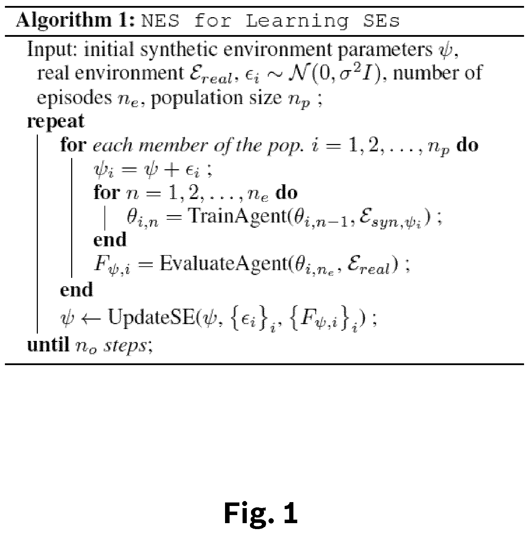

Based on the formulated problem statement, let us now explain our method. The overall NES scheme is adopted from Salimans et al. (see Salimans, T.; Ho, J.; Chen, X.; and Sutskever, I. 2017. Evolution Strategies as a Scalable Alternative to Reinforcement Learning. arXiv:1703.03864) and depicted in Algorithm 1 in figure 1. We instantiate the search distribution as an isotropic multivariate Gaussian with mean 0 and a covariance $\sigma^2 I$ yielding the score function estimator

$$\frac{1}{\sigma} E_{\epsilon \sim N(0,I)} \{ F(\psi + \sigma\, \epsilon)\epsilon \}\ .$$

The main difference to Salimans et al. is that, while they maintain a population over perturbed agent parameter vectors, our population consists of perturbed SE parameter vectors. In contrast to their approach, our NES approach also involves two optimizations, namely that of the agent and the SE parameters instead of only the agent parameters.

Our algorithm first stochastically perturbs each population member according to the search distribution resulting in $\psi_i$. Then, a new randomly initialized agent is trained in *TrainAgent* on the SE parameterized by $\psi_i$ for $n_e$ episodes. The trained strategy of the agent with optimized parameters is then evaluated on the real environment in *EvaluateAgent,* yielding the average cumulative reward across e.g. 10 test episodes which we use as a score $F_{\psi,i}$ in the above score function estimator. Finally, we update $\psi$ in *UpdateSE* with a stochastic gradient estimate based on all member scores via a weighted sum:

$$\psi < -\psi + \alpha\ \frac{1}{n_p \sigma}\ \sum_{i}^{n_p} F_i\, \epsilon_i.$$

Preferably we repeat this process $n_o$ times but perform manual early-stopping when a resulting SE is capable of training agents that consistently solve the target task. Preferably, a parallel version of the algorithm can be used by utilizing one worker for each member of the population at the same time.

Determining the number of required training episodes $n_e$ on an SE is challenging as the rewards of the SE may not provide information about the current agent's performance on the real environment. Thus, we optionally use a heuristic to early-stop training once the agent's training performance on the synthetic environment converged. Let us refer to the cumulative reward of the $k$-th training episode as $C_k$. The two values $C_d$ and $C_{2d}$ maintain a non-overlapping moving average of the cumulative rewards over the last d and 2d respective episodes k. Now, if $|C_d - C_{2d}|\ /\ |C_{2d}| \le C_{diff}$ the training is stopped. Exemplarly, $d = 10$ and $C_{diff} = 0.01$. Training of agents on real environments is stopped when the average cumulative reward across the last d test episodes exceeds the solved reward threshold.

Independent of which of the environments ($\varepsilon_{real}$ or $\varepsilon_{syn}$) we train an agent on, the process to assess the actual agent performance is equivalent: we do this by running the agent on 10 test episodes from $\varepsilon_{real}$ for a fixed number of task specific steps (i.e. 200 on CartPole-v0 and 500 on Acrobotv1) and use the cumulative rewards for each episode as a performance proxy.

Due to known sensitivity to hyperparameters (HPs), one can additionally apply a hyperparameter optimization. In addition to the inner and outer loop of our algorithm, one can use another outer loop to optimize some of the agent and NES HPs with BOHB (see Falkner, S.; Klein, A.; and Hutter, F. 2018. BOHB: Robust and Efficient Hyperparameter Optimization at Scale. In Proc. of ICML'18, 1437-1446.) to identify stable HPs.

Shown in figure 2 is one embodiment of an actuator 10 in its environment 20. Actuator 10 interacts with a control system 40. Actuator 10 and its environment 20 will be jointly called actuator system. At preferably evenly spaced distances, a sensor 30 senses a condition of the actuator system. The sensor 30 may comprise several sensors. Preferably, sensor 30 is an optical sensor that takes images of the environment 20. An output signal S of sensor 30 (or, in case the sensor 30 comprises a plurality of sensors, an output signal S for each of the sensors) which encodes the sensed condition is transmitted to the control system 40.

Thereby, control system 40 receives a stream of sensor signals S. It then computes a series of actuator control commands A depending on the stream of sensor signals S, which are then transmitted to actuator 10.

Control system 40 receives the stream of sensor signals S of sensor 30 in an optional receiving unit 50. Receiving unit 50 transforms the sensor signals S into input signals x. Alternatively, in case of no receiving unit 50, each sensor signal S may directly be taken as an input signal x. Input signal x may, for example, be given as an excerpt from sensor signal S. Alternatively, sensor signal S may be processed to yield input signal x. Input signal x comprises image data corresponding to an image recorded by sensor 30. In other words, input signal x is provided in accordance with sensor signal S.

Input signal x is then passed on to a learned strategy 60, obtained as described above, which may, for example, be given by an artificial neural network.

Strategy 60 is parametrized by parameters, which are stored in and provided by parameter storage $St_1$.

Strategy 60 determines output signals y from input signals x. The output signal y characterizes an action. Output signals y are transmitted to an optional conversion unit 80, which converts the output signals y into the control commands A. Actuator control commands A are then transmitted to actuator 10 for controlling actuator 10 accordingly. Alternatively, output signals y may directly be taken as control commands A.

Actuator 10 receives actuator control commands A, is controlled accordingly and carries out an action corresponding to actuator control commands A. Actuator 10 may comprise a control logic which transforms actuator control command A into a further control command, which is then used to control actuator 10.

In further embodiments, control system 40 may comprise sensor 30. In even further embodiments, control system 40 alternatively or additionally may comprise actuator 10.

In still further embodiments, it may be envisioned that control system 40 controls a display 10a instead of an actuator 10.

Furthermore, control system 40 may comprise a processor 45 (or a plurality of processors) and at least one machine-readable storage medium 46 on which instructions are stored which, if carried out, cause control system 40 to carry out a method according to one aspect of the invention.

Figure 3 shows an embodiment in which control system 40 is used to control an at least partially autonomous robot, e.g. an at least partially autonomous vehicle 100.

Sensor 30 may comprise one or more video sensors and/or one or more radar sensors and/or one or more ultrasonic sensors and/or one or more LiDAR sensors and or one or more position sensors (like e.g. GPS). Some or all of these sensors are preferably but not necessarily integrated in vehicle 100. Alternatively or additionally sensor 30 may comprise an information system for determining a state of the actuator system. One example for such an information system is a weather information system which determines a present or future state of the weather in environment 20.

For example, using input signal x, the strategy 60 may for example control the robot such that a goal is reached with a minimal number of steps.

Actuator 10, which is preferably integrated in vehicle 100, may be given by a brake, a propulsion system, an engine, a drivetrain, or a steering of vehicle 100. Actuator control commands A may be determined such that actuator (or actuators) 10 is/are controlled such that vehicle 100 avoids collisions with objects.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, actuator command control A may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses sensor 30, preferably an optical sensor, to determine a state of plants in the environment 20. Actuator 10 may be a nozzle for spraying chemicals. Depending on an identified species and/or an identified state of the plants, an actuator control command A may be determined to cause actuator 10 to spray the plants with a suitable quantity of suitable chemicals.

In even further embodiments, the at least partially autonomous robot may be given by a domestic appliance (not shown), like e.g. a washing machine, a stove, an oven, a microwave, or a dishwasher. Sensor 30, e.g. an optical sensor, may detect a state of an object which is to undergo processing by the household appliance.

For example, in the case of the domestic appliance being a washing machine, sensor 30 may detect a state of the laundry inside the washing machine. Actuator control signal A may then be determined depending on a detected material of the laundry.

Shown in figure 4 is an embodiment in which control system controls an access control system 300. Access control system may be designed to physically control access. It may, for example, comprise a door 401. Sensor 30 is configured to detect a scene that is relevant for deciding whether access is to be granted or not. It may for example be an optical sensor for providing image or video data, for detecting a person's face. Strategy 60 may be configured to interpret this image or video data. Actuator control signal A may then be determined depending on the interpretation of strategy 60, e.g. in accordance with the determined identity. Actuator 10 may be a lock which grants access or not depending on actuator control signal A. A non-physical, logical access control is also possible.

Shown in figure 5 is an embodiment in which control system 40 controls a surveillance system 400. This embodiment is largely identical to the embodiment shown in figure 5. Therefore, only the differing aspects will be described in detail. Sensor 30 is configured to detect a scene that is under surveillance. Control system does not necessarily control an actuator 10, but a display 10a. For example, strategy 60 may determine e.g. whether the scene detected by optical sensor 30 is suspicious. Actuator control signal A which is transmitted to display 10a may then e.g. be configured to cause display 10a to adjust the displayed content dependent on the determined classification, e.g. to highlight an object that is deemed suspicious by strategy 60.

Shown in figure 6 is an embodiment of a control system 40 for controlling an imaging system 500, for example an MRI apparatus, x-ray imaging apparatus or ultrasonic imaging apparatus. Sensor 30 may, for example, be an imaging sensor. Strategy 60 may then determine a region for taking the image. Actuator control signal A may then be chosen in accordance with this region, thereby controlling display 10a.

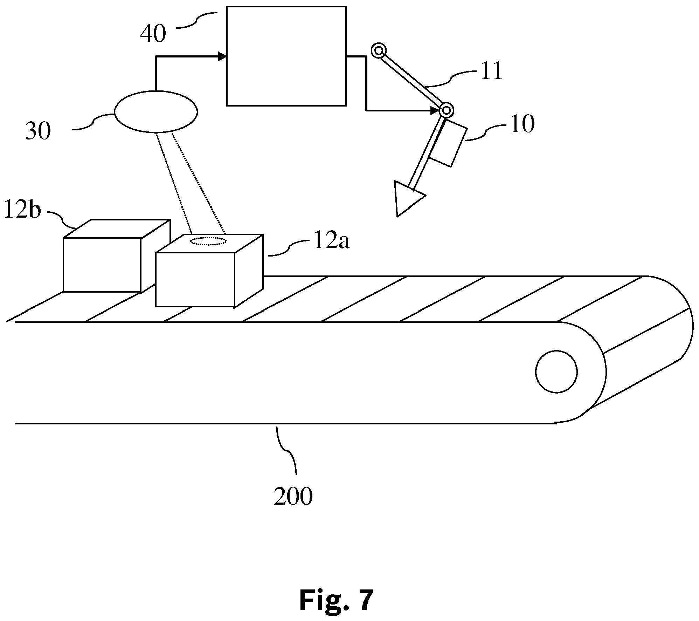

Shown in figure 7 is an embodiment in which control system 40 is used to control a manufacturing machine 11, e.g. a punch cutter, a cutter or a gun drill) of a manufacturing system 200, e.g. as part of a production line. The control system 40 controls an actuator 10 which in turn control the manufacturing machine 11.

Sensor 30 may be given by an optical sensor which captures properties of e.g. a manufactured product 12. Strategy 60 may determine depending on a state of the manufactured product 12, e.g. from these captured properties, a corresponding action to manufacture the final product. Actuator 10 which controls manufacturing machine 11 may then be controlled depending on the determined state of the manufactured product 12 for a subsequent manufacturing step of manufactured product 12.

Claims

1. A computer-implemented method for learning a strategy ($\pi$), which is configured to control an agent, comprising the steps of:

   Providing synthetic environment parameters ($\psi$) and a real environment ($\varepsilon_{real}$) and a population of initialized strategies;
   Repeating subsequent steps for a predetermined number of repetitions as a first loop:

   (1) Carrying out for each strategy of the population of strategies subsequent steps as a second loop:

   (a) Disturbing the synthetic environment parameters ($\psi$) with random noise;
   (b) Training the strategy on the synthetic environment ($\varepsilon_{syn}$) constructed depending on the disturbed synthetic environment parameters;
   (c) Determining rewards achieved by the trained strategy, which is applied on the real environment ($\varepsilon_{real}$);

   (2) Updating the synthetic environment parameters ($\psi$) depending on the rewards of the trained strategies of the second loop; and

   Outputting the strategy ($\pi$) of the trained strategies, which achieved the highest reward on the real environment ($\varepsilon_{real}$) or which achieved the highest reward during training on the synthetic environment ($\varepsilon_{real}$).

2. The method according to claim 1, wherein updating of the synthetic environment parameters ($\psi$) is carried out by stochastic gradient estimate based on a weighted sum of the determined rewards of the trained strategies in the second loop.

3. The method according to claim 1 or 2, wherein the steps of the second loop, in particular training of the strategy, are carried out in parallel for the strategies of the population of strategies.

4. The method according to any of the claims 1 to 3, wherein each strategy is randomly initialized before training it on the synthetic environment ($\varepsilon_{syn}$).

5. The method according to any one of claims 1 to 4, wherein the step of training the strategy is terminated if a change of a moving average of the cumulative rewards over a given number previous episodes of the training is smaller than a given threshold.

6. The method according to any one claims 1 to 5, wherein a Hyperparameter Optimization is carried out to optimize hyperparameters of the training method for training the strategies and/or optimization method for updating the synthetic environment parameters.

7. The method according to any of the preceding claims, wherein the synthetic environment is represented by a neural network, wherein the synthetic environment parameters ($\psi$) are parameters, in particular weights, of said neural network.

8. The method according to any one of the preceding claims, wherein an actuator (10) of the agent is controlled depending on determined actions by the outputted strategy.

9. The method according to claims 8, in which the agent is an at least partially autonomous robot (100) and/or a manufacturing machine (200)) and/or an access control system (300).

10. A computer-implemented method for learning a synthetic environment, Providing synthetic environment parameters ($\psi$) and a real environment ($\varepsilon_{real}$) and a population of initialized strategies;
    Repeating subsequent steps for a predetermined number of repetitions as a first loop:

    (1) Carrying out for each strategy of the population of strategies subsequent steps as a second loop:

    (a) Disturbing the synthetic environment parameters ($\psi$) with random noise;
    (b) Training the strategy on the synthetic environment constructed depending on the disturbed synthetic environment parameters;
    (c) Determining rewards achieved by the trained strategy, which is applied on the real environment ($\varepsilon_{real}$);

    (2) Updating the synthetic environment parameters ($\psi$) depending on the rewards of the trained strategies of the second loop; and

    Outputting the updated synthetic environment parameters ($\psi$).

11. Computer program that is configured to cause a computer to carry out the method according to any one of claims 1 to 10 with all of its steps if the computer program is carried out by a processor (45, 145).

12. Machine-readable storage medium (46, 146) on which the computer program according to claim 11 is stored.

**13.** Apparatus configured to carry out the method according to any of the preceding claims 1 - 10

**Amended claims in accordance with Rule 137(2) EPC.**

**1.** A computer-implemented method for learning a strategy ($\pi$), which is configured to control an agent, comprising the steps of:

Providing synthetic environment parameters ($\psi$) and a real environment ($\varepsilon_{real}$) and a population of initialized strategies;
Repeating subsequent steps for a predetermined number of repetitions as a first loop:

(1) Carrying out for each strategy of the population of strategies subsequent steps as a second loop:

(d) Disturbing the synthetic environment parameters ($\psi$) with random noise;
(e) Training the strategy on the synthetic environment ($\varepsilon_{syn}$) constructed depending on the disturbed synthetic environment parameters;
(f) Determining rewards achieved by the trained strategy, which is applied on the real environment ($\varepsilon_{real}$);

(2) Updating the synthetic environment parameters ($\psi$) depending on the rewards of the trained strategies of the second loop; and
Outputting the strategy ($\pi$) of the trained strategies, which achieved the highest reward on the real environment ($\varepsilon_{real}$) or which achieved the highest reward during training on the synthetic environment ($\varepsilon_{real}$).

**2.** The method according to claim 1, wherein updating of the synthetic environment parameters ($\psi$) is carried out by stochastic gradient estimate based on a weighted sum of the determined rewards of the trained strategies in the second loop.

**3.** The method according to claim 1 or 2, wherein the steps of the second loop, in particular training of the strategy, are carried out in parallel for the strategies of the population of strategies.

**4.** The method according to any of the claims 1 to 3, wherein each strategy is randomly initialized before training it on the synthetic environment ($\varepsilon_{syn}$).

**5.** The method according to any one of claims 1 to 4, wherein the step of training the strategy is terminated if a change of a moving average of the cumulative rewards over a given number previous episodes of the training is smaller than a given threshold.

**6.** The method according to any one claims 1 to 5, wherein a Hyperparameter Optimization is carried out to optimize hyperparameters of the training method for training the strategies and/or optimization method for updating the synthetic environment parameters.

**7.** The method according to any of the preceding claims, wherein the synthetic environment is represented by a neural network, wherein the synthetic environment parameters ($\psi$) are parameters, in particular weights, of said neural network.

**8.** The method according to any one of the preceding claims, wherein an actuator (10) of the agent is controlled depending on determined actions by the outputted strategy.

**9.** The method according to claims 8, in which the agent is an at least partially autonomous robot (100) and/or a manufacturing machine (200)) and/or an access control system (300).

**10.** A computer-implemented method for learning a synthetic environment, comprising the steps of:

Providing synthetic environment parameters ($\psi$) and a real environment ($\varepsilon_{real}$) and a population of initialized strategies;
Repeating subsequent steps for a predetermined number of repetitions as a first loop:

(1) Carrying out for each strategy of the population of strategies subsequent steps as a second loop:

(d) Disturbing the synthetic environment parameters ($\psi$) with random noise;
(e) Training the strategy on the synthetic environment constructed depending on the disturbed synthetic environment parameters;
(f) Determining rewards achieved by the trained strategy, which is applied on the real environment ($\varepsilon_{real}$);

(2) Updating the synthetic environment parameters ($\psi$) depending on the rewards of the trained strategies of the second loop; and
Outputting the updated synthetic environ-

ment parameters ($\psi$).

11. Computer program that is configured to cause a computer to carry out the method according to any one of claims 1 to 10 with all of its steps if the computer program is carried out by a processor (45, 145).

12. Machine-readable storage medium (46, 146) on which the computer program according to claim 11 is stored.

13. Apparatus configured to carry out the method according to any of the preceding claims 1 - 10

**Algorithm 1:** `NES for Learning SEs`

Input: initial synthetic environment parameters $\psi$,
   real environment $\mathcal{E}_{real}$, $\epsilon_i \sim \mathcal{N}(0, \sigma^2 I)$, number of
   episodes $n_e$, population size $n_p$ ;

**repeat**

   **for** *each member of the pop.* $i = 1, 2, \ldots, n_p$ **do**

      $\psi_i = \psi + \epsilon_i$ ;

      **for** $n = 1, 2, \ldots, n_e$ **do**

         $\theta_{i,n} = \text{TrainAgent}(\theta_{i,n-1}, \mathcal{E}_{syn,\psi_i})$ ;

      **end**

      $F_{\psi,i} = \text{EvaluateAgent}(\theta_{i,n_e}, \mathcal{E}_{real})$ ;

   **end**

   $\psi \leftarrow \text{UpdateSE}(\psi, \left\{\epsilon_i\right\}_i, \left\{F_{\psi,i}\right\}_i)$ ;

**until** $n_o$ *steps*;

# Fig. 1

EP 4 027 273 A1

**Fig. 2**

10a

60

40

45,46

100

30

10

**Fig. 3**

Fig. 4

**Fig. 5**

EP 4 027 273 A1

**Fig. 6**

**Fig. 7**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FELIPE PETROSKI SUCH ET AL: "Generative Teaching Networks: Accelerating Neural Architecture Search by Learning to Generate Synthetic Training Data", ARXIV.ORG, CORNELL UNIVERSITY LIBRARY, 201 OLIN LIBRARY CORNELL UNIVERSITY ITHACA, NY 14853, 17 December 2019 (2019-12-17), XP081560001, * page 1 - page 26 * | 1-13 | INV. G06N7/00 G06N3/08 G06N3/00 G06N5/00 G06N3/04 |
| A | TIM SALIMANS ET AL: "Evolution Strategies as a Scalable Alternative to Reinforcement Learning", ARXIV.ORG, CORNELL UNIVERSITY LIBRARY, 201 OLIN LIBRARY CORNELL UNIVERSITY ITHACA, NY 14853, 11 March 2017 (2017-03-11), XP080756190, * page 1 - page 10 * | 1-13 | |
| A | US 2020/356855 A1 (YEH CHIH-HUNG [US] ET AL) 12 November 2020 (2020-11-12) * paragraph [0002] - paragraph [0131] * * figures 1-10 * | 1-13 | TECHNICAL FIELDS SEARCHED (IPC) G06N |

The present search report has been drawn up for all claims

| Place of search | Date of completion of the search | Examiner |
|---|---|---|
| Munich | 28 June 2021 | Ernst, Jens |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 15 0717

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2021

| Patent document cited in search report | Publication date | Patent family member(s) | Publication date |
|---|---|---|---|
| US 2020356855 A1 | 12-11-2020 | NONE | |

EPO FORM P0459

For more details about this annex : see Official Journal of the European Patent Office, No. 12/82

**EP 4 027 273 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **FELIPE PETROSKI et al.** Generative teaching networks: Accelerating neural architecture search by learning to generate synthetic training data. *International Conference on Machine Learning,* 2020, https://arxiv.org/abs/1912.07768
- **SUTTON, R. S. ; MCALLESTER, D. ; SINGH, S. ; MANSOUR, Y.** Policy Gradient Methods for Reinforcement Learning with Function Approximation. *NeurIPS 2000,* 2000
- **HOSU, I. ; REBEDEA, T.** Playing Atari Games with Deep Reinforcement Learning and Human Checkpoint Replay. *CoRR abs/1607.05077,* 2016
- **SALIMANS, T. ; HO, J. ; CHEN, X. ; SUTSKEVER, I.** Evolution Strategies as a Scalable Alternative to Reinforcement Learning. *arXiv:1703.03864,* 2017
- **FALKNER, S. ; KLEIN, A. ; HUTTER, F.** BOHB: Robust and Efficient Hyperparameter Optimization at Scale. *Proc. of ICML'18,* 2018, 1437-1446